# DEMANDE DE BREVET EUROPEEN

(11) **EP 1 376 808 A1**
(43) Date de publication de la demande: **02.01.2004**
(21) Numéro de dépôt: 03291595.1
(22) Date de dépôt: 27.06.2003
(51) Int. Cl.: H02G 3/32

(54) **Dispositif de fixation à support d'un conduit de cheminement de câbles et système comprenant un conduit et un tel dispositif**

(30) Priorité: 28.06.2002 FR 0208119
(71) Demandeur: Planet Wattohm, 60300 Senlis (FR)
(72) Inventeur: Peyriga, Pascal, 60320 Bethisy Saint Martin (FR); Billault, Christophe, 75018 Paris (FR); Perrard, Stéphane, 95330 Domont (FR)
(74) Mandataire: Quantin, Bruno

(57) **Abrégé**

La présente invention concerne une dispositif pour la fixation d'au moins un conduit (10) de cheminement de câbles en treillis de fils (10A, 10B) soudés à un quelconque support.

Selon l'invention, il comprend un clips (100), globalement en forme de U, qui est apte à s'enrouler autour d'un premier fil longitudinal (10A) d'un conduit de cheminement de câbles et dont les branches (110, 120) présentent aux extrémités des retours (111, 121) dirigés dans des sens opposés vers l'extérieur dudit clips, un desdits retours étant apte à s'accrocher sur un deuxième fil longitudinal (10A) dudit conduit, voisin du premier fil longitudinal, et l'autre desdits retours comportant des moyens (113, 20) pour assurer la fixation du clips à un quelconque support ou accessoire.

## Description

La présente invention concerne d'une manière générale la fixation de conduits de cheminement câbles à une structure porteuse.

De tels conduits permettent de supporter et de guider des câbles, tels que des câbles électriques, des câbles téléphoniques, des câbles de fibre optique, des câbles de réseau informatique, voire des canalisations rigides ou flexibles.

Ils ont globalement une section en U et sont constitués d'une tôle ou d'une matière plastique perforée ou encore de fils soudés ensemble de manière à former une sorte de panier courant suivant un parcours souhaité.

L'invention concerne plus particulièrement un dispositif pour la fixation d'au moins un conduit de cheminement de câbles en treillis de fils soudés à un quelconque support.

Ce dispositif peut également jouer le rôle d'une éclisse apte à assurer le raccordement entre deux conduits de cheminement de câbles en treillis de fils soudés.

On connaît déjà des documents antérieurs FR 2 698 416, EP 0 229 554 et FR 2 208 219 des éclisses pour des conduits de cheminement de câbles en treillis de fils soudés qui présentent des formes allongées selon la direction longitudinale desdits conduits, avec des parties rigides d'appui contre les fils longitudinaux de ces conduits, des systèmes de butée et des moyens d'accrochage plus ou moins élastiques aux fils longitudinaux et transversaux desdits conduits de cheminement de câbles.

Ces éclisses sont complexes, encombrantes et difficiles à mettre en oeuvre pour un installateur.

Afin de remédier aux inconvénients précités de l'état de la technique, l'invention propose un nouveau dispositif de fixation d'un conduit de cheminement de câbles en treillis de fils soudés peu encombrant et facile à mettre en place sur un ou deux conduits de cheminement de câbles à raccorder.

Plus particulièrement, selon l'invention, ce nouveau dispositif comprend un clips, globalement en forme de U, qui est apte à s'enrouler autour d'un premier fil longitudinal d'un conduit de cheminement de câbles et dont les branches présentent aux extrémités des retours dirigés dans des sens opposés vers l'extérieur dudit clips, un desdits retours étant apte à s'accrocher sur un deuxième fil longitudinal dudit conduit, voisin du premier fil longitudinal, et l'autre desdits retours comportant des moyens pour assurer la fixation du clips à un quelconque support ou accessoire.

D'autres caractéristiques non limitatives et avantageuses du dispositif selon l'invention sont les suivantes :
- les branches du clips se rapprochent localement l'une de l'autre à proximité du fond dudit clips pour former un premier rétrécissement permettant au clips d'être mis en place par encliquetage sur le premier fil longitudinal du conduit ;
- les branches du clips se rapprochent localement l'une de l'autre à proximité desdits retours pour former un second rétrécissement permettant au clips d'être prépostionné par encliquetage sur le premier fil longitudinal du conduit ;
- une des branches du clips présente, entre le premier rétrécissement et son retour, une forme globalement en S ;
- ledit retour dudit clips, apte à s'accrocher sur le deuxième fil longitudinal du conduit, présente une forme de crochet, et l'autre retour dudit clips se présente sous la forme d'une plate-forme pourvue desdits moyens de fixation du clips ;
- les moyens de fixation du clips comprennent une ouverture allongée prévue dans ladite plate-forme et apte à être traversée par un organe d'ancrage ou de fixation ;
- ledit dispositif selon l'invention comporte un support auxiliaire apte à être fixé sur ledit retour en forme de plate-forme et adapté à supporter un câble qui court, selon l'axe longitudinal dudit conduit, à l'extérieur de celui-ci, sur au moins une partie de sa longueur ;
- ledit support auxiliaire comporte deux pièces, sensiblement en forme de U, superposées de façon à prendre en sandwich le câble à supporter, et un système de fixation du type vis-écrou apte à traverser l'ouverture allongée du retour en forme de plate-forme dudit clips ainsi que lesdites pièces pour les solidariser l'une à l'autre en les serrant sur ledit câble ;
- ledit support auxiliaire comporte, d'une part, une équerre qui reçoit ledit câble et un cavalier dont les branches sont conformées de sorte que celui-ci est apte à être engagé élastiquement sur ledit câble, les extrémités libres des branches du cavalier étant aptes à se coincer sur ladite équerre, et, d'autre part, un système de fixation du type vis-écrou apte à traverser l'ouverture allongée du retour en forme de plate-forme dudit clips ainsi que le cavalier pour le solidariser audit clips ;
- la branche du clips, apte à s'accrocher sur le deuxième fil longitudinal du conduit, présente, sur sa face tournée vers le conduit, un renfoncement ou une fente longitudinal(e) destiné(e) à accueillir un fil transversal dudit conduit ainsi qu'un fil transversal d'un autre conduit abouté audit conduit ;
- ledit clips est réalisé d'une seule pièce en matière métallique ; et
- ledit clips est réalisé d'une seule pièce en matière synthétique.

L'invention concerne également un système de cheminement de câbles qui comprend un conduit de cheminement de câbles en treillis de fils soudés et une pluralité de clips selon l'invention.

Préférentiellement, un tel système comprend également des organes d'ancrage ou de fixation adaptés à être rapportés sur les retours des branches correspondantes des clips selon l'invention.

La description qui va suivre en regard des dessins annexés, donnés à titre d'exemples non limitatifs, fera bien comprendre en quoi consiste l'invention et comment elle peut être réalisée.

Sur les dessins annexés ;
- la figure 1 est une vue schématique en perspective d'un système de cheminement de câbles selon l'invention ;
- la figure 2 est une vue en bout du système de la figure 1 ;
- la figure 3 est une vue schématique de détail d'un premier mode de réalisation d'un dispositif de fixation selon l'invention faisant partie du système représenté sur la figure 1 ;
- la figure 4 est une vue schématique en perspective qui représente les différentes étapes de mise en place du dispositif de fixation représenté sur la figure 3 sur un conduit de cheminement de câbles en treillis de fils soudés ;
- la figure 5 est une vue schématique en perspective d'un système de cheminement de câbles selon l'invention rapporté sur un support sensiblement vertical ;
- la figure 6 est une vue schématique en perspective d'un système de cheminement de câbles selon l'invention rapporté sur un support sensiblement horizontal ;
- la figure 7 est une vue schématique en perspective d'un conduit de cheminement de câbles en treillis de fils soudés suspendu verticalement au dispositif de fixation de la figure 3 ;
- la figure 8 est une vue schématique en perspective de deux systèmes de cheminement de câbles, selon l'invention, superposés ;
- la figure 9 est une vue schématique en perspective du système de cheminement de câbles représenté sur la figure 1 sur lequel est rapporté un premier mode de réalisation d'un support auxiliaire selon l'invention pour le support et la fixation, à l'extérieur du conduit, d'un câble ;
- la figure 10 est une vue schématique de détail en éclaté du support auxiliaire de la figure 9 ;
- la figure 11 est une vue schématique en perspective du système de cheminement de câbles de la figure 1 sur lequel est rapporté un deuxième mode de réalisation d'un support auxiliaire selon l'invention pour le support et la fixation d'un autre câble courant à l'extérieur du conduit de cheminement de câbles dudit système ;
- la figure 12 est une vue schématique de détail en éclaté du support auxiliaire représenté sur la figure 11 ;
- la figure 13 est une vue schématique de détail d'un deuxième mode de réalisation du dispositif de fixation selon l'invention ; et
- les figures 14 et 15 représentent les étapes de mise en place du dispositif de fixation représenté sur la figure 13 sur deux conduits de cheminement de câbles aboutés, ledit dispositif de fixation jouant le rôle d'éclisse.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

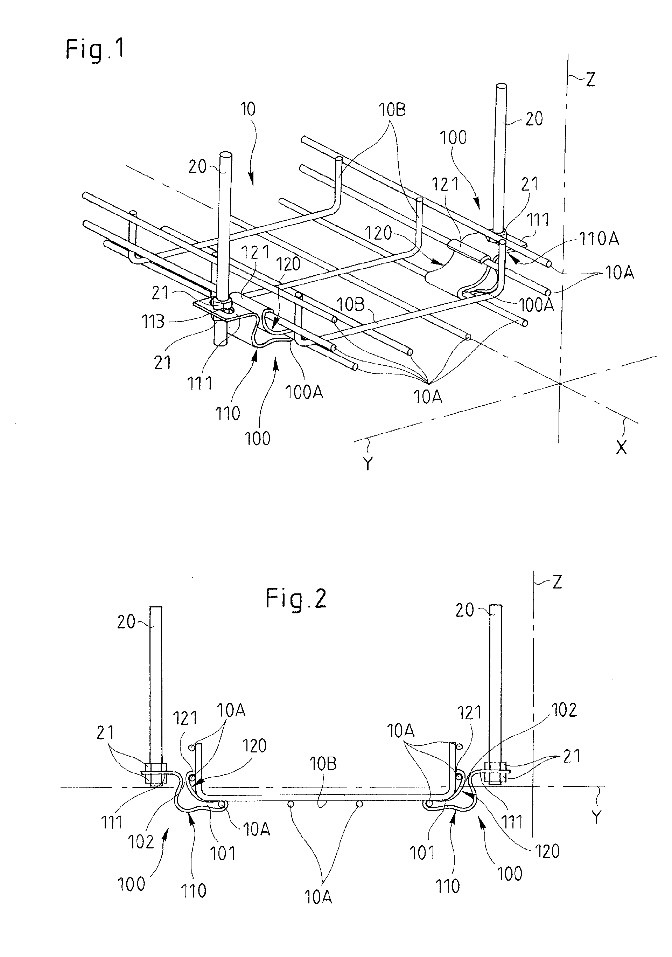

Sur les figures 1 à 4, on a représenté un système de cheminement de câbles qui comporte un conduit 10 de cheminement de câbles qui s'étend selon l'axe longitudinal X ainsi qu'un dispositif pour la fixation de ce conduit 10 à un quelconque support ou accessoire.

Ici, le conduit 10 de cheminement de câbles présente une section en U avec un fond à partir duquel s'élèvent des ailes latérales parallèles.

Ce conduit 10 de cheminement de câbles est un treillis de fils longitudinaux 10A et transversaux 10B soudés entre eux par points de manière à former une sorte de panier courant suivant un parcours souhaité.

Avantageusement, le dispositif pour la fixation de ce conduit 10 de cheminement de câbles comporte, ici, sur chacune des ailes latérales du conduit 10, un clips 100.

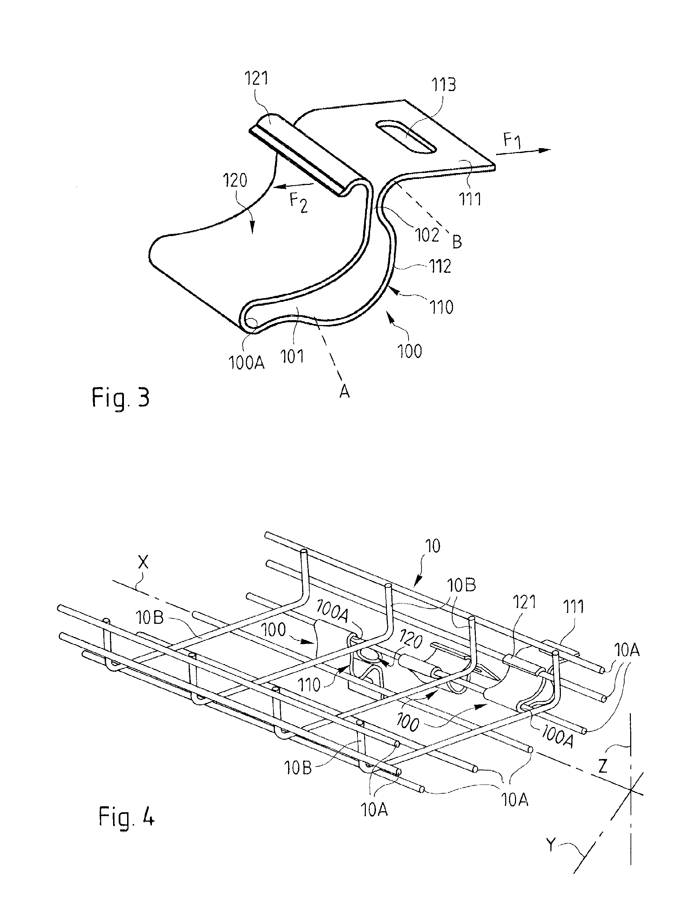

Comme le montre plus particulièrement la figure 3, chaque clips 100 présente globalement une forme en U avec un fond 100A, ici arrondi, à partir duquel s'étendent des branches 110, 120.

Ce clips 100 est apte à s'enrouler autour d'un premier fil longitudinal 10A du conduit 10 de cheminement de câbles de sorte qu'il s'étend principalement selon les axes Y et Z transversaux à l'axe longitudinal X du conduit 10.

Selon l'exemple du système représenté sur les figures 1 à 4, chaque clips 100 s'enroule autour d'un premier fil longitudinal 10A qui est situé sur un bord d'extrémité longitudinal du fond dudit conduit 10, à proximité de l'aile latérale correspondante dudit conduit 10.

Ainsi, chaque premier fil longitudinal 10A est positionné dans le fond 100A de chaque clips 100 en forme de U.

Les branches 110, 120 de chaque clips 100 présentent, à leur extrémité libre, des retours 111, 121 dirigés dans des sens opposés F1, F2 vers l'extérieur du clips 100 (voir figure 3).

Comme le montrent les figures 1, 2 et 4, un des retours 121 de chaque clips 100 est apte à s'accrocher sur un deuxième fil longitudinal 10A du conduit 10, voisin du premier fil longitudinal 10A.

Chaque deuxième fil longitudinal 10A appartient ici à une aile latérale du conduit 10.

L'autre des retours 111 de chaque clips 100 comporte des moyens 113 pour assurer la fixation du clips 100 à un quelconque support ou accessoire.

Le retour 121 de chaque clips 100, destiné à s'accrocher sur le deuxième fil longitudinal 10A du conduit 10, présente une forme de crochet tandis que l'autre retour 111 de chaque clips 100 se présente sous la forme d'une plate-forme pourvue d'une ouverture allongée 113 apte à être traversée par un organe d'ancrage ou de fixation 20.

Ici, l'ouverture allongée 113 prévue dans le retour 111 de chaque clips 100 présente une forme oblongue.

Le système représenté sur les figures 1 et 2 comporte, en tant qu'organe d'ancrage ou de fixation, une tige ou tirant 20 traversant l'ouverture allongée 113 prévue dans le retour 111 de chaque clips 100. Chaque tige ou tirant 20 est solidarisé audit retour 111 au moyen de boulons 21 serrés de part et d'autre du retour 111.

La tige ou tirant 20 traversant chaque clips 100 permet de fixer ledit système à un support ou une paroi (non représenté) situé ici au-dessus dudit conduit 10 parallèlement à celui-ci.

Avantageusement, les branches 110, 120 de chaque clips 100, qui définissent entre elles un conduit d'engagement du premier fil longitudinal 10A du conduit 10, se rapprochent localement l'une de l'autre, à proximité du fond 100A dudit clips 100 pour former un premier rétrécissement 101 dudit conduit d'engagement permettant au clips 100 d'être mis en place par encliquetage sur le premier fil longitudinal 10A du conduit 10.

En outre, les branches 110, 120 de chaque clips 100 se rapprochent localement l'une de l'autre à proximité desdits retours 111, 121 pour former un second rétrécissement 102 du conduit d'engagement du premier fil longitudinal 10A correspondant du conduit 10 permettant au clips 100 d'être prépositionné par encliquetage sur le premier fil longitudinal 10A du conduit 10.

Bien entendu, ce second rétrécissement du conduit d'engagement n'étant pas indispensable, il peut ne pas exister dans une variante non représentée du clips.

Une des branches 110 de chaque clips 100, celle qui porte le retour 111 en forme de plate-forme, présente, entre le premier rétrécissement 101 et son retour 111, une forme globalement en S.

Plus particulièrement, cette forme en S de la branche 110 s'étend entre les points A, B matérialisés sur la figure 3.

Cette forme en S confère avantageusement une certaine élasticité au clips 100 permettant de le positionner facilement par encliquetage sur le premier fil longitudinal 10A correspondant du conduit 10.

Chaque clips 100 est formé d'une seule pièce en matière métallique ou synthétique.

La figure 4 montre une première manière de mettre en place chaque clips 100 sur un conduit 10 de cheminement de câbles.

Tout d'abord, le clips 100 est enroulé sur le premier fil longitudinal 10A du conduit 10 en étant suspendu à ce fil par son fond 100A.

Puis, le clips 100 est pivoté ou basculé autour du premier fil longitudinal 10A du conduit 10 pour être amené dans une position sensiblement parallèle à l'aile latérale correspondante du conduit 10 dans laquelle le retour 121, en forme de crochet, de la branche 120 correspondante, vient s'accrocher sur le deuxième fil longitudinal 10A du conduit, voisin du premier fil longitudinal 10A et appartenant ici à ladite aile latérale du conduit 10.

Dans cette position, la plate-forme constituant le retour 111 de l'autre branche 110 du clips 100 s'étend sensiblement perpendiculairement à l'aile latérale correspondante du conduit 10 et est prête à recevoir un organe d'ancrage ou de fixation 20 tel que celui représenté sur les figures 1 et 2.

Avantageusement, lorsque le clips 100 est encliqueté et accroché sur les fils longitudinaux 10A du conduit 10, il peut encore être coulissé sur lesdits fils, sur une distance correspondant à l'écartement de deux fils transversaux 10B consécutifs du conduit 10, de façon à ajuster sa position sur le conduit 10. De plus, l'ouverture allongée 113 de forme oblongue prévue dans le retour 111 du clips permet d'ajuster la position de l'organe d'ancrage ou de fixation traversant ladite ouverture allongée 113.

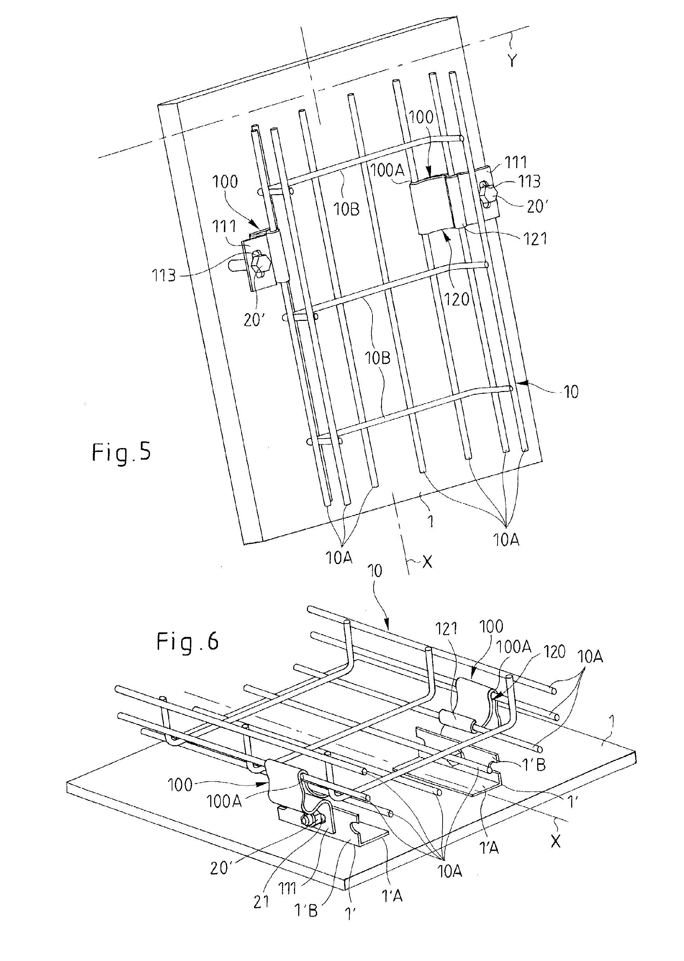

Sur la figure 5, on a représenté le conduit 10 de cheminement de câbles de la figure 1 fixé à sur un support 1 sensiblement vertical au moyen de deux clips 100, tels que décrits précédemment, rapportés sur chaque aile latérale du conduit 10.

Ici, chaque clips 100 est fixé au support 1 au moyen d'une vis ou boulon 20' traversant l'ouverture allongée 113 prévue dans chaque retour 111 de chaque clips 100 et fixé ou ancré dans le support 1 vertical.

Sur la figure 6, on a représenté une autre manière de positionner chaque clips 100 sur le conduit 10 de cheminement de câbles pour fixer ce conduit 10 à un support 1, ici horizontal, par l'intermédiaire d'accessoires 1' en forme d'équerre de façon à laisser un espace entre le conduit 10 et le support 1.

Dans ce cas, chaque clips 100 est enroulé autour d'un premier fil longitudinal 10A appartenant à une aile latérale du conduit 10 et s'étend en direction du support 1 situé ici en dessous du conduit 10 de manière que le retour 121, en forme de crochet, de la branche 120 du clips 100 s'accroche sur un deuxième fil longitudinal 10A, voisin du premier fil longitudinal 10A et appartenant au fond du conduit 10.

Ici, chaque clips 100 s'étend tête en bas par rapport à la position de chaque clips 100 représenté sur les figures 1 et 2.

Le retour 111 en forme de plate-forme, porté par l'autre branche 110 de chaque clips 100, s'étend perpendiculairement au fond du conduit 10, sensiblement parallèlement à l'aile latérale correspondante du conduit 10.

Le retour 111 de chaque clips 100 vient se positionner contre une partie verticale 1'B d'un des accessoires 1' en forme d'équerre dont la partie horizontale 1'A est positionnée sur le support 1.

Dans cette position, l'ouverture allongée 113 du retour 111 du clips 100 est placée en regard d'une ouverture prévue dans l'accessoire 1' et le clips 100 est solidarisé à ce dernier au moyen d'un système vis-écrou 20', 21.

De cette manière, on positionne le conduit 10 au-dessus du support 1 à une distance de celui-ci correspondant à une partie de la hauteur de la partie verticale 1'B de l'accessoire 1'.

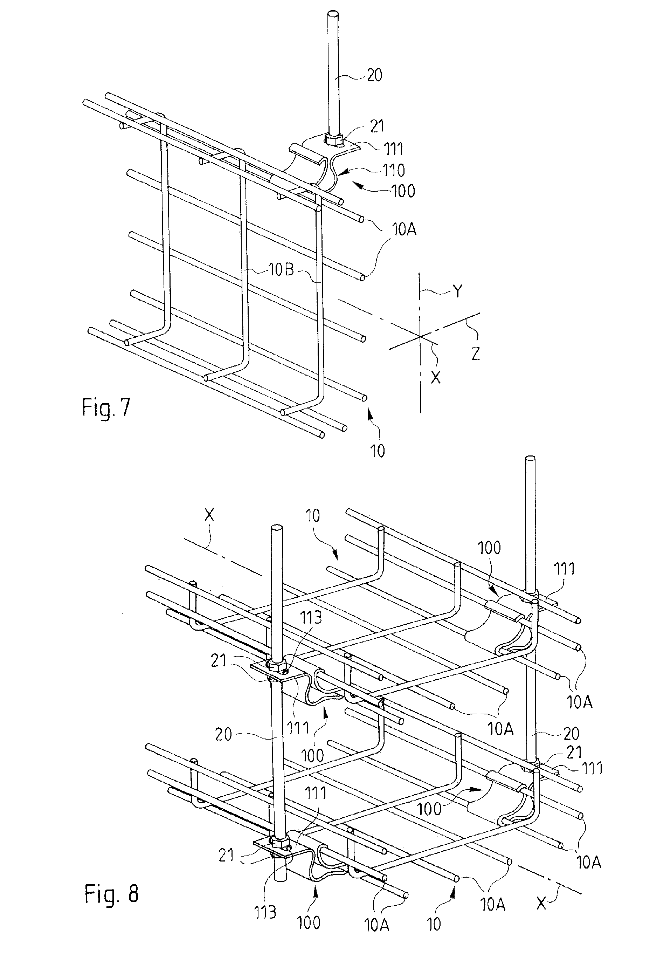

Sur la figure 7, on a représenté le conduit 10 de cheminement de câbles représenté sur la figure 1 suspendu par l'une de ses ailes latérales à un clips 100 enroulé sur un premier fil longitudinal 10A du conduit appartenant au fond de ce dernier, mais pas accroché par l'intermédiaire de son retour 121, en forme de crochet, au deuxième fil longitudinal 10A dudit conduit.

Le clips 100 est également fixé par l'intermédiaire d'une tige ou tirant 20 à un support non représenté.

Comme pour le conduit 10 représenté sur la figure 1, cette tige ou tirant 20 traverse l'ouverture allongée 113 prévue dans le retour 111 du clips 100 et est solidarisé à ce retour 111 par l'intermédiaire de boulons 21.

La position représentée sur la figure 7 du conduit 10 peut être une position d'attente avant de venir basculer le conduit 10 de manière à accrocher le clips 100 sur le deuxième fil longitudinal 10A de celui-ci.

Sur la figure 8, on a représenté deux conduits 10 de cheminement de câbles identiques superposés de manière à suivre des trajectoires parallèles.

Chacun des conduits 10 de cheminement de câbles porte, sur chaque aile latérale, un clips 100 mis en place de manière identique au clips 100 représenté sur la figure 1.

Les clips 100 du conduit 10 supérieur sont positionnés au-dessus des clips 100 du conduit 10 inférieur de sorte que les ouvertures allongées 113 prévues dans les retours 111 desdits clips sont deux à deux superposées.

De cette manière, une tige ou tirant 20 traverse les deux clips 100 superposés, positionnés d'un même côté des deux conduits 10, et une autre tige ou tirant 20 traverse les deux autres clips 100 superposés, positionnés de l'autre côté des conduits 10.

Les deux tiges ou tirants 20 permettent de fixer l'ensemble des deux conduits 10 de cheminement de câbles superposés à un quelconque support situé en dessous ou au-dessus de ces conduits.

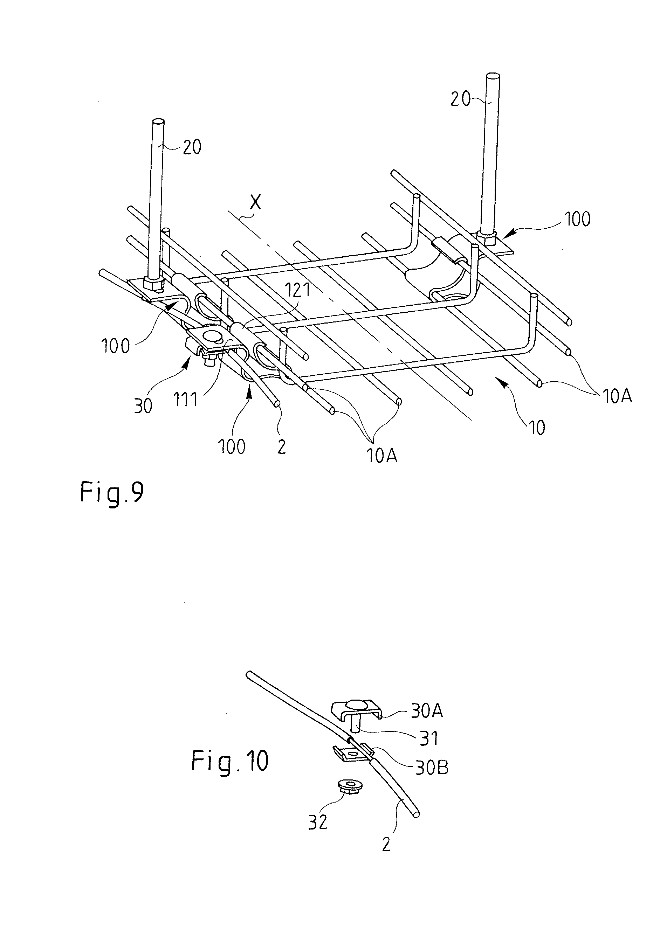

Sur la figure 9, on a représenté un système de cheminement de câbles identique à celui représenté sur la figure 1 auquel est rajouté un clips 100 supplémentaire, positionné sur une des ailes latérales du conduit 10 de cheminement de câbles, pour la fixation d'un support auxiliaire 30.

Ce support auxiliaire 30 est apte à être fixé sur le retour 111 en forme de plate-forme du clips 100 correspondant et est adapté à supporter un câble 2 qui court, sensiblement selon l'axe longitudinal X du conduit 10, à l'extérieur de celui-ci, sur au moins une partie de sa longueur.

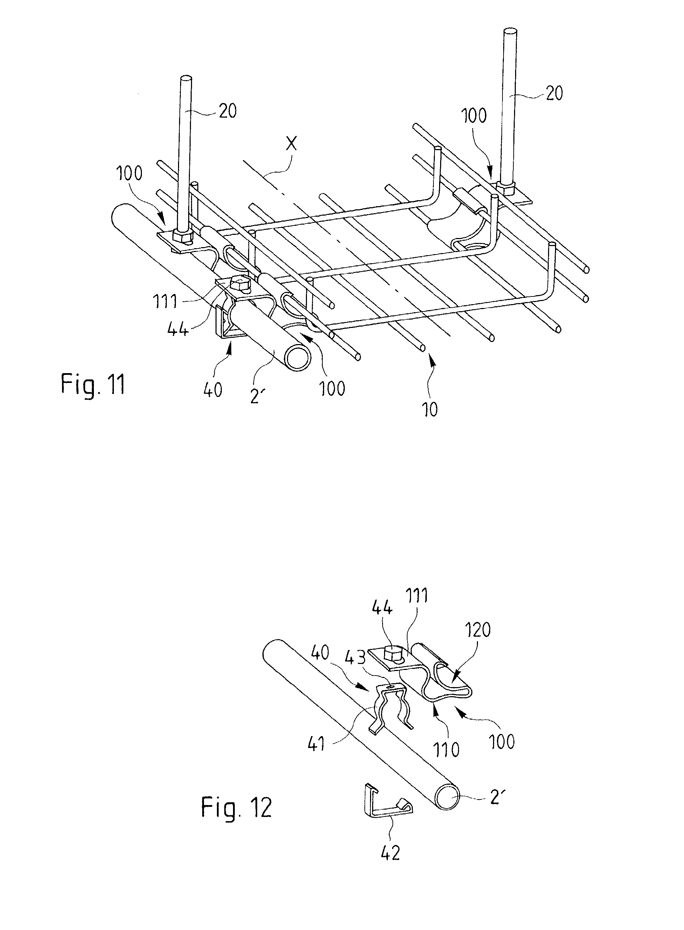

Ici, comme le montre la figure 10, ce support auxiliaire 30 comporte deux pièces 30A, 30B, sensiblement en forme U, qui sont superposées de manière que la pièce 30B inférieure forme un berceau recevant le câble 2 et la pièce 30A supérieure forme un couvercle.

Les deux pièces 30A, 30B prennent en sandwich le câble 2 à supporter. Ces pièces 30A, 30B peuvent être réalisées en matière métallique ou synthétique. Elles sont chacune percées d'un orifice traversant.

Le support auxiliaire 30 comporte également un système de fixation comprenant ici une vis 31 et un écrou 32. La vis 31 est apte à traverser l'ouverture allongée 113 du retour 111 en forme de plate-forme du clips 100 correspondant ainsi que les orifices traversants des deux pièces 30A, 30B pour les solidariser l'une à l'autre en les serrant au moyen de l'écrou 32 sur ledit câble 2.

Sur la figure 11, on a représenté un autre mode de réalisation d'un support auxiliaire 40 adapté à être fixé sur un retour 111 en forme de plate-forme d'un clips 100 rapporté sur une aile latérale du conduit 10 de la même manière que les clips 100 permettant de fixer le conduit 10 à un support.

Ici aussi, ce support auxiliaire 40 est adapté à supporter un câble 2', ici un câble de plus gros diamètre, qui court, globalement selon l'axe longitudinal X dudit conduit 10, à l'extérieur de celui-ci, sur au moins une partie de sa longueur.

Comme le montre la figure 12, ce support auxiliaire 40 comporte, d'une part, une équerre 42 qui reçoit le câble 2', et, d'autre part, un cavalier 41 dont les branches sont conformées de sorte que le cavalier est apte à être engagé élastiquement sur le câble 2'. Les extrémités libres des branches du cavalier 41 sont aptes à venir se coincer sur l'équerre 42 (voir figure 11).

Le support auxiliaire 40 comporte également un système de fixation 44 du type vis-écrou. La vis 44 traverse l'ouverture allongée 113 du retour 111 en forme de plate-forme du clips 100 correspondant, ainsi qu'une ouverture 43 prévue dans le cavalier 41 pour solidariser ce dernier au clips 100.

Les câbles 2 et 2' rapportés à l'extérieur du conduit 10 peuvent être soit des câbles d'alimentation d'un bloc d'éclairage monté sur une aile latérale du conduit 10, soit une canalisation quelconque ou toute autre application.

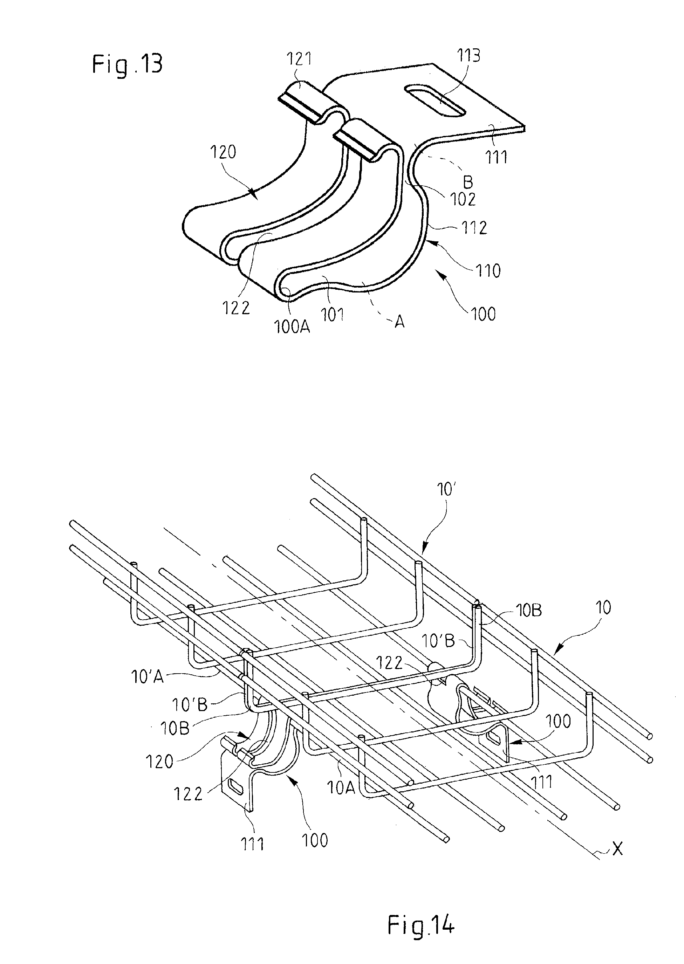

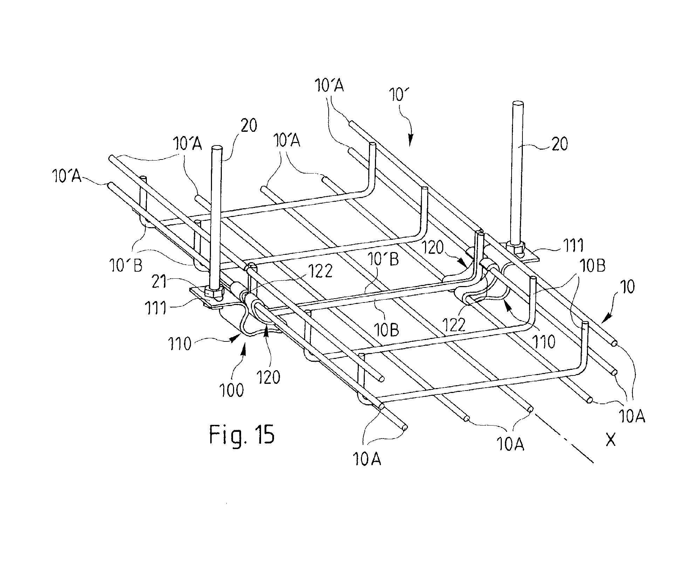

Sur les figures 14 et 15, on a représenté un système de cheminement de câbles dans lequel deux conduits 10, 10' de cheminement de câbles identiques, en treillis de fils longitudinaux 10A, 10'A et transversaux 10B, 10'B soudés, sont positionnés bout à bout et solidarisés l'un à l'autre par une éclisse selon l'invention.

Cette éclisse, représentée plus particulièrement sur la figure 13, est un clips 100 dont la branche 120, apte à s'accrocher sur les deuxièmes fils longitudinaux 10A, 10'A aboutés des conduits 10, 10', présente, sur sa face tournée vers les conduits 10, 10', un renfoncement ou une fente longitudinal(e) 122 destiné(e) à accueillir un fil transversal 10B d'un desdits conduits 10 ainsi qu'un fil transversal 10'B de l'autre desdits conduits 10'.

Ici, comme le montre plus particulièrement la figure 13, il s'agit d'une fente longitudinale 122 qui s'étend depuis le retour 121 de la branche 120 correspondante du clips 100 jusqu'au fond 100A du clips 100.

Bien entendu, le clips 100 est également réalisé en une seule pièce, tout comme le clips 100 représenté sur la figure 3, en matière métallique ou synthétique.

Comme le montrent les figures 14 et 15, pour solidariser l'un à l'autre les conduits 10, 10' mis bout à bout, on positionne à la jonction des deux conduits, de chaque côté de ces conduits 10, 10', un clips 100 en l'enroulant sur les premiers fils longitudinaux 10A, 10'A aboutés des deux conduits 10, 10', les fils transversaux 10B, 10'B correspondants juxtaposés passant au travers de la fente longitudinale 122.

Dans cette position, représentée sur la figure 14, chaque clips 100 est suspendu par son fond aux premiers fils longitudinaux 10A, 10'A mis bout à bout des conduits 10, 10'.

Puis, on fait pivoter ou basculer chaque clips 100 autour des fils longitudinaux 10A, 10'A correspondants des conduits 10, 10' de manière à ce que le retour 121, en forme de crochet, de chaque clips 100 vient s'accrocher sur les deuxièmes fils longitudinaux 10A, 10'A aboutés des conduits 10, 10' (voir figure 15).

Dans cette position, représentée sur la figure 15, une partie des fils transversaux 10B, 10'B juxtaposés des conduits 10, 10' s'engage dans la fente longitudinale 122 de la branche 120 correspondante de chaque clips.

De cette manière, les conduits 10, 10' sont immobilisés l'un par rapport à l'autre.

On peut alors fixer l'ensemble à un support au moyen d'un organe d'ancrage ou de fixation, tel qu'une tige ou tirant 20 représenté sur la figure 15, qui est introduit au travers de chaque ouverture allongée 113 prévue dans le retour 111 correspondant de chaque clips 100.

Chaque tige ou tirant 20 est alors solidarisé au retour 111 correspondant au moyen de boulons 21 vissés et serrés sur le retour 111 du clips 100.

La présente invention n'est nullement limitée aux modes de réalisation décrits et représentés, mais l'homme du métier saura y apporter toute variante conforme à son esprit.

## Revendications

1. Dispositif pour la fixation d'au moins un conduit (10, 10') de cheminement de câbles en treillis de fils (10A, 10B, 10'A, 10'B) soudés à un quelconque support (1 ; 1'), **caractérisé en ce qu'**il comprend un clips (100), globalement en forme de U, qui est apte à s'enrouler autour d'un premier fil longitudinal (10A, 10'A) d'un conduit (10, 10') de cheminement de câbles et dont les branches (110, 120) présentent aux extrémités des retours (111, 121) dirigés dans des sens opposés (F1, F2) vers l'extérieur dudit clips (100), un desdits retours (121) étant apte à s'accrocher sur un deuxième fil longitudinal (10A, 10'A) dudit conduit (10), voisin du premier fil longitudinal (10A, 10'A), et l'autre desdits retours (111) comportant des moyens (113, 20 ; 20') pour assurer la fixation du clips à un quelconque support (1) ou accessoire (1' ; 30 ; 40).

2. Dispositif selon la revendication 1, **caractérisé en ce que** les branches (110, 120) du clips (100) se rapprochent localement l'une de l'autre à proximité du fond (100A) dudit clips (100) pour former un premier rétrécissement (101) permettant au clips (100) d'être mis en place par encliquetage sur le premier fil longitudinal (10A, 10'A) du conduit (10, 10').

3. Dispositif selon la revendication 2, **caractérisé en ce que** les branches (110, 120) du clips (100) se rapprochent localement l'une de l'autre à proximité desdits retours (111, 121) pour former un second rétrécissement (102) permettant au clips (100) d'être prépostionné par encliquetage sur le premier fil longitudinal (10A, 10'A) du conduit (10, 10').

4. Dispositif selon l'une des revendications 2 ou 3, **caractérisé en ce qu'**une des branches (110) du clips (100) présente, entre le premier rétrécissement (101 ) et son retour (111), une forme globalement en S.

5. Dispositif selon l'une des revendications 1 à 4, **caractérisé en ce que** ledit retour (121) dudit clips (100), apte à s'accrocher sur le deuxième fil longitudinal (10A, 10'A) du conduit (10, 10'), présente une forme de crochet, et l'autre retour (111) dudit clips (100) se présente sous la forme d'une plate-forme pourvue desdits moyens de fixation du clips.

6. Dispositif selon la revendication 5, **caractérisé en ce que** lesdits moyens de fixation du clips comprennent une ouverture allongée (113) prévue dans ladite plate-forme et apte à être traversée par un organe d'ancrage ou de fixation (20 ; 20').

7. Dispositif selon l'une des revendications 5 ou 6, **caractérisé en ce qu'**il comporte un support auxiliaire (30 ; 40) apte à être fixé sur ledit retour (111) en forme de plate-forme et adapté à supporter un câble (2 ; 2') qui court, selon l'axe longitudinal (X) dudit conduit (10), à l'extérieur de celui-ci, sur au moins une partie de sa longueur.

8. Dispositif selon la revendication 7, **caractérisé en ce que** ledit support auxiliaire (30) comporte deux pièces (30A, 30B), sensiblement en forme de U, superposées de façon à prendre en sandwich le câble (2) à supporter, et un système de fixation (31, 32) du type vis-écrou apte à traverser l'ouverture allongée (113) du retour (111) en forme de plate-forme dudit clips (100) ainsi que lesdites pièces (30A, 30B) pour les solidariser l'une à l'autre en les serrant sur ledit câble (2).

9. Dispositif selon la revendication 7, **caractérisé en ce que** ledit support auxiliaire (40) comporte, d'une part, une équerre (42) qui reçoit ledit câble (2') et un cavalier (41 ) dont les branches sont conformées de sorte que celui-ci est apte à être engagé élastiquement sur ledit câble (2'), les extrémités libres des branches du cavalier (41) étant aptes à se coincer sur ladite équerre (42), et, d'autre part, un système de fixation (44) du type vis-écrou apte à traverser l'ouverture allongée (113) du retour (111) en forme de plate-forme dudit clips (100) ainsi que le cavalier (41 ) pour le solidariser audit clips (100).

10. Dispositif selon l'une quelconque des revendications précédentes, **caractérisé en ce que** la branche (120) du clips (100), apte à s'accrocher sur le deuxième fil longitudinal (10A, 10'A) du conduit (10, 10'), présente, sur sa face tournée vers le conduit (10, 10'), un renfoncement ou une fente longitudinal(e) (122) destiné(e) à accueillir un fil transversal (10B) dudit conduit (10) ainsi qu'un fil transversal (10'B) d'un autre conduit (10') abouté audit conduit (10).

11. Dispositif selon l'une des revendications précédentes, **caractérisé en ce que** ledit clips (100) est réalisé d'une seule pièce en matière métallique.

12. Dispositif selon l'une des revendications 1 à 9, **caractérisé en ce que** ledit clips (100) est réalisé d'une seule pièce en matière synthétique.

13. Système de cheminement de câbles comprenant un conduit (10) de cheminement de câbles en treillis de fils (10A, 10B) soudés et une pluralité de clips (100) selon l'une quelconque des revendications 1 à 11.

14. Système selon la revendication 13, **caractérisé en ce qu'**il comporte en outre des organes d'ancrage (20 ; 20) aptes à coopérer avec les moyens prévus dans un des retours (111) de chaque clips (100) pour la fixation du clips (100) à un quelconque support ou accessoire.
